# EUROPEAN PATENT APPLICATION

(11) **EP 2 945 140 A1**
(43) Date of publication of application: **18.11.2015**
(21) Application number: 14167936.5
(22) Date of filing: 12.05.2014
(51) Int. Cl.: G08G 1/0967, B60W 30/14

(54) **System and method for operating a vehicle taking into account information on traffic lights and surrounding vehicles**

(71) Applicant: AVL List GmbH, 8020 Graz (AT)
(72) Inventor: Jones, Stephen, 8051 Graz (AT); Kural, Emre, 8010 Graz (AT); Parrilla, Alejandro Ferreira, 8020 Graz (AT); Massoner, Alexander, 8055 GRAZ (AT); Weingerl, Patrick, 8020 Graz (AT)
(74) Representative: Babeluk, Michael

(57) **Abstract**

A method for operating an ego vehicle with at least one prime mover on a route during approaching and passing one or several traffic lights (TL1, TL2, TL3), comprising the following steps which are continuously iterated during operation of the ego vehicle:
a) scheduling a data map of traffic lights (TL1, TL2, TL3), including positions and green phase sequences of the traffic lights (TL1, TL2, TL3);
b) gathering the position of the ego vehicle, preferably by a global positioning system;
c) recording the position and the speed of surrounding vehicles, preferably of vehicles driving on the same route ahead of the ego vehicle;
d) gathering information about the route ahead, preferably environmental information and/or traffic information and/or information on the position and the speed of at least one surrounding vehicle driving ahead of and/or behind the ego vehicle;
e) gathering power-train and efficiency information of the ego vehicle;
f) estimating and optimizing a velocity profile on the basis of steps a) to e), wherein an acceleration trajectory (T3) is determined for efficiently operating the power-train while passing the route's traffic lights.

## Description

The invention concerns to a system and a method for operating an ego vehicle with at least one prime mover on a route during approaching and passing one or several traffic lights. The route consists of road segments, the respective segments being defined as areas between traffic lights or other static objects.

The document US 2010/0088002 A1 describes a system for improving fuel economy of a motor vehicle by reducing stops at traffic signals, to thereby attempt to keep the vehicle in continuous motion. The motor vehicle is equipped with a Global Position Sensor and a computer The Global Position Sensor (GPS) continually informs the computer of the current position of the vehicle. The computer is equipped with data-tables which enable it to identify the next traffic signal which the vehicle will encounter and the timing data for that traffic signal which indicates when the signal will be green. The computer then computes a recommended speed for the vehicle, which speed will enable the vehicle to reach the traffic signal when the signal is green.

In the US 2008/0094250 A1 a management system for saturated traffic roads networks is disclosed, comprising a green wave coordination of locally adaptive traffic control units, a traffic movement optimization and live traffic route guidance. Current traffic congestion measurements on intersections are generated from local traffic cameras and remote air-borne conventional cameras and thermal sensing imaging cameras or satellite radar using optical image brightness analysis. At the first stage of traffic optimization, individual local intersection green times are computed based on current traffic congestion level. At the second stage optimization, the central traffic server uses a multiobjective approach to coordinate the current locally-optimized green times of the first stage and create input constraints for green-way coordination of plurality of traffic lights. The server updates dynamically current cycle start and green times on all network-connected traffic light controllers and also broadcasts recommended travel times, green times and green waves to all on-line client vehicle navigation units.

A traffic routing display system with a visual display of the expected state of an upcoming traffic light is described in WO 2011/163006 A1. In one aspect, the display is an icon coloured to correspond to the expected state. In another aspect, the time remaining before the state of a traffic light changes is displayed. The effect that an indicator has on driver behaviour is used to determine the type of indicator to provide to the driver. Certain indicators may not be displayed by the system depending on the effect they have on the driver

The US 2012/0109421 A1 discloses a wireless/automated method and system of synchronizing the speed and acceleration/deceleration of an unlimited number of preceding/trailing vehicles to achieve 'mechanical like' coupling, comparable to railroad cars. This includes wireless transmitting of the speed and notification of acceleration/deceleration of a preceding vehicle to a trailing vehicle, automated response to the speed and acceleration/deceleration of a preceding vehicle by a trailing vehicle so that the trailing vehicle accelerates/decelerates in near simultaneous synchronization with the preceding vehicle, and alerting the driver to automated vehicle acceleration.

The DE 10 2008 061 303 A1 describes a vehicle control system for estimating a distance to an ahead vehicle on the basis of c2c (car to car) and c2i (car to infrastructure, e.g., a traffic light)- communication and , wherein the driving assistant system resumes the estimated distance for vehicle control.

The document DE 10 2008 037 883 A1 shows a traffic control system with a traffic light system creating meta information on the basis of input surrounding information. The traffic light system acting as data pool is able to emulate a road section on the basis of information measured or received by adjacent vehicles autonomously. Further the traffic light system creating more meta information communicates with vehicles in order to enable a constant traffic flow.

The JP 2008 296 798 A discloses a control device for a vehicle wherein an electronic control unit (ECU) calculates a travelling distance from a current position of a vehicle to the next traffic light installed on a scheduled travelling route, and acquires a traffic light change timing information (when a green light of the next traffic light starts or ends). Furthermore, the ECU calculates a recommended speed (so that the vehicle is able to reach the traffic light during the green light) at which the vehicle is able to pass through the traffic light during the green light of the next traffic signal based on the travelling distance to the next traffic light and a traffic light change timing information, and a recommended speed display part display the recommended speed. Thus, it is possible to urge a driver to run the vehicle at a recommended speed, and the vehicle is able to pass through the traffic light during the green light more frequently without stopping at the traffic light when the driver performs an acceleration operation to run the vehicle at the recommended speed. Therefore, it is possible to reduce stop operations of the vehicle at a red light.

Disclosed methods allow a decrease of stops at traffic lights and, consequently, smoother passage of routes with traffic lights and a reduction of fuel consumption. But none of the disclosures consider the power-trains and the energy status of the vehicle.

It is the object of the present invention to provide a method which enables to pass the traffic lights in a most-efficient way.

In accordance with the invention, this is achieved by the following steps which are continuously iterated during operation of the ego vehicle:
a) scheduling a data map of traffic lights, including positions and phase sequences of the traffic lights;
b) gathering the position of the ego vehicle, preferably by a global positioning system;
c) recording the position and the speed of surrounding vehicles, preferably of vehicles driving on the same route ahead of and/or behind the ego vehicle;
d) gathering surrounding vehicle information about the route, preferably environmental information and/or traffic information and/or information on the position and the speed of at least one surrounding vehicle driving ahead of and/or behind the ego vehicle;
e) gathering power-train and efficiency information of the ego vehicle;
f) estimating and optimizing a velocity profile on the basis of steps a) to e), wherein an acceleration trajectory is estimated for efficiently operating the power-train while approaching and passing the route's traffic lights.;

By including environmental information (e.g., by vehicle-to-infrastructure communication) as well as considering surrounding vehicles in addition to power-train- and ego vehicle-information the invention allows for energy-efficient driving in conventional combustion engine vehicles as well as hybrid- and electric vehicles, also using the recuperation potential of electrified power trains. This cannot be done by prior art methods but necessitates an additional velocity profile optimization as proposed by the invention. The optimization is related to recuperation efficiency mainly characterized by vehicle speed, brake torque, voltage level of battery and temperature of electric machine and battery. In step f), referring to steps a) to e) means that the data map of traffic lights, the surrounding vehicle information and the power-train and efficiency information are considered.

In a variant of the invention a step g) following step f) is provided where the optimized velocity profile is applied to the ego vehicle preferably either automatically or by activation of a respective driving mode which applies the optimized profile by the driver of the ego vehicle or by the driver of the ego vehicle via driving recommendations derived from the optimization of step f).

In the case of automatic application of the optimized velocity profile the ego vehicle is accelerated or decelerated autonomously or semiautonomously based on the results of step f). In the case of application activated by the driver the optimization is either proposed by the ego vehicle via some kind of display unit or active decision by driver, pushing a respective button or the like. Driving recommendations for active application of the optimization by the driver may include some kind of visual guidance via a display, acoustic proposals and the like. Thereby, correct implementation of the optimization and particularly efficient driving can be secured.

Preferably vehicle behaviour during the acceleration trajectory of step f) is predicted based on a longitudinal vehicle model and/or a power-train model. By including the power-train's reaction to the optimization not only efficient passing of traffic lights but also saving or even recuperating energy is possible.

In another variant of the invention in step f) a sequence of n desired acceleration values for a specific time slot of n time units (e.g., n=1, 2, ..., 20 seconds) is generated, wherein at least one or more of the acceleration values are applied and the remaining acceleration values are used to predict the power-train's reaction to the optimized velocity profile of step f) in subsequent iterations of the method. This further increases the efficiency of the method according to the invention.

In yet another variant of the invention in step f) a sequence of n desired acceleration values for a specific time slot of n time units is generated, wherein a sequence of torque demands for the prime mover at least one or more of the acceleration values are applied and the remaining acceleration values are used to predict the power-train's reaction to the optimized velocity profile of step f) in subsequent iterations of the method. This further increases the efficiency of the method according to the invention.

In yet another variant of the invention in step f) a sequence of n desired acceleration values for a specific time slot of n time units is generated, wherein is established based on the sequence of desired acceleration values, wherein preferably the sequence incorporates the predicted vehicle behaviour.

The invention not only focuses on avoiding halt at the next upcoming traffic lights, but also considers several upcoming static traffic objects (traffic light(s), speed limitations, etc.) in advance, to optimize velocity profiles. This is done under consideration of other road users which may interfere with the elsewise desired profile. The invention also provides an optimal solution for scenarios where a stop is unavoidable.

According to the present invention velocity profiles are optimized and applied considering constraint information, preferably by considering one or more of the following restricting elements: static traffic objects, speed limitations, power-train limitations, environmental details. This means that the method according to the invention increases efficiency when approaching static traffic objects (traffic light(s)), road segments with specific properties (e.g., low average velocity due to congestions, bad road conditions and the like) but also considers relevant moving traffic objects (e.g. other vehicles or pedestrians and future manoeuvers of other vehicles ahead of and/or behind the ego vehicle)) in case these moving objects are relevant to a driving manoeuvre that is related to traffic lights. Optimization in this context means minimizing or maximizing a cost function. The cost function can correspond to the energy spent or gained during such a driving manoeuvre and the necessary time to complete such a manoeuvre. Energy gained particularly applies to electric machines and their recuperation capabilities. This is achieved by defining some sort of optimality criterion. Also various on-board and off-board information sources are utilized (e.g. v2v, 2vi, vehicle surroundings, radar, radio, GPS data, 3-D road data, etc.).

By applying the proposed method, actuating variables are derived. The invention can be used in energy management systems of any full electric vehicle, hybrid vehicle or vehicle powered by a combustion engine or any other vehicle with at least one engine. The proposed method can also deal with and react to other vehicles that influence the own velocity profile in road segments ahead in addition to the traffic light(s) information. The application of the calculated actuating control variables or optimal operating modes can be achieved either by indication of the optimal behaviour to the driver or by utilization of (semi-) autonomous driving of the vehicle.

The invention is characterized by definable boundaries which are used to ensure that for example individual driving comfort criteria, power-train characteristic and route specifics are met. This is done under the consideration of all relevant system constraints. The invention utilizes and combines various on-board and off-board information sources to fulfil its task. To reduce computational effort on the vehicle side, parts of the calculation can be done off-board and by only supplying a matrix of the results of the off-board computation to the on-board algorithm.

Advantages and benefits of the invention are reduced energy consumption (e.g. enhanced range for vehicles, reduced emissions), increasing driving comfort and efficient driving by allowing for smooth and efficient passing of traffic lights and other static objects on a route. The driving time may be decreased if the proposed method results in avoiding a red light or minimizes the waiting time due to red lights or if the proposed method utilizes the green wave of traffic lights. Also, safety is improved.

The method according to the invention may further include other cars via appropriate communication means to allow for even more efficiency. If, for instance, more than one single vehicle is approaching an upcoming traffic light or a series of upcoming traffic lights, these vehicles can form some sort of "collective approach". This means that via vehiclce2vehicle (v2v) and/or vehicle2infrastructure (v2i) communication it becomes possible that these vehicles adjust their velocity profile and/or switch lanes in a way that results in efficient and/or comfortable and safe driving. This goal can either be achieved by giving recommendations to the driver(s) and/or by (semi-)autonomous driving.

In an advantageous embodiment variant of the invention future manoeuvres of the other vehicles in front of the ego-vehicle can be considered, e.g., if it is known (or if it can be predicted) that a vehicle will turn left/right at a traffic light.

The control system for operating the ego-vehicle comprises
- an information and receiver sensorics module collecting information from the environment by corresponding sensors;
- a situation analyzer module analyzing the possibility of gathering a green phase corridor for all traffic lights, considering information about the positions and sequences of traffic lights, surrounding vehicles, and environmental information;
- a constraint handler module defining constraints for the optimization;
- a real time optimization module estimating an optimized acceleration trajectory based on the constraints;
- a vehicle level module, to apply/translate an acceleration trajectory into torque values for the prime mover.

In a variant of the invention the system also comprises a human machine interface module which allows the driver to hand over the vehicle to the control system.

The invention will be described hereinafter with reference to the figures, in which:
- Fig. 1: shows a simplified diagram of the inventive method illustrating the signals flow and the main modules,
- Fig. 2: shows module A in detail,
- Fig. 3: shows module B in detail,
- Fig. 4: shows module C in detail,
- Fig. 5: shows module D in detail,

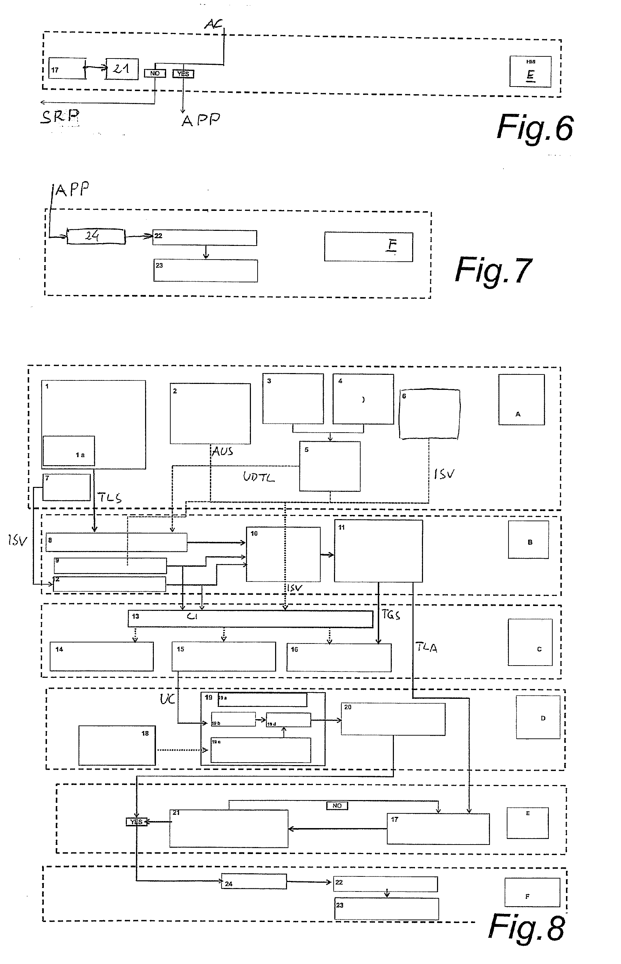

- Fig. 6: shows module E in detail,
- Fig. 7: shows module F in detail,
- Fig. 8: shows the inventive method in detail,
- Fig. 9: shows a diagram comparing traffic light passes of a vehicle with and without using the inventive method,
- Fig. 10: shows a distance-time diagram with multiple possible trajectories for entering green wave of two traffic lights ahead,
- Fig. 11: shows the balance of energy for each of the possible trajectories of Fig. 10,
- Fig. 12: shows the third trajectory of Fig. 10 unmated,
- Fig. 13: to Fig. 15 show narrowing the available corridor of the third trajectory and
- Fig. 16: shows optimizing the velocity profile/trajectory.

The control system for operating an ego vehicle with at least one prime mover on a route during approaching and passing one or several traffic lights according to the invention comprises an information and receiver and sensorics module A, a situation analyzer module B, a constraint handler module C, a real time optimization module D, a human machine interface module E and a vehicle level module F. The route travelled consists of road segments, the respective segments being defined as areas between traffic lights or other static objects. The system continuously and iteratively performs the method according to the invention during operation of the ego vehicle.

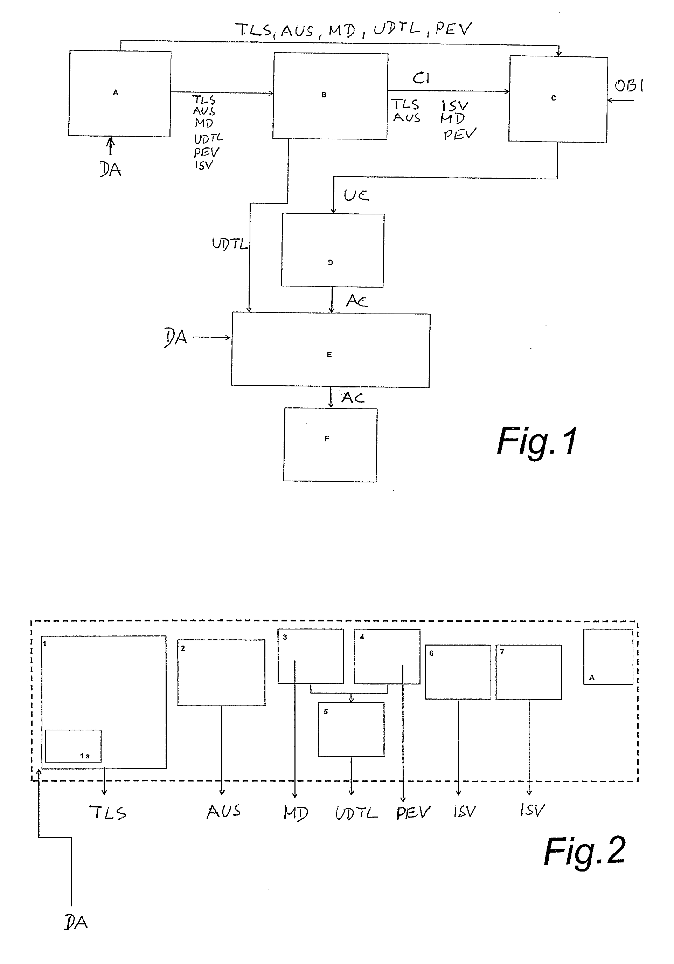

The receiver and sensorics module A (Fig. 2) collects information from the environment by corresponding sensorics, e.g., the position and sequence of traffic lights or the scheduling of their green or red phases, respectively, thereby creating a data map of the traffic lights. In principle, the system functions when the ego-vehicle is operated but could also be activated only upon driver acceptance DA.

The vehicle gets in item 1 infrastructure information (e.g., via v2i-communication), preferably multiple traffic light scheduling signals 1a, of surrounding traffic lights and their scheduling (instant time of green/red phase, length of time of green/red phase, transition periods between green and red phases, maybe in the form of a orange/yellow phase, possible change of rhythm of green phases, and so on). In item 2 the vehicle gathers information (e.g., via v2i-communication, using footage of external traffic cameras, etc.) of average traffic speed in upcoming road segments. The traffic light positions are scheduled in a map. On the basis of map data 3 and updated positioning data 4 of a GPS (global positioning system) of the ego vehicle the distance between the ego vehicle and the traffic lights is estimated (item 5). Further information from surrounding vehicles maybe collected via v2v-communication (item 6, optionally) and via front/rear camera and/or radar devices (item 7). Other environmental information (e.g., weather, road conditions, etc.) might be gathered as well.

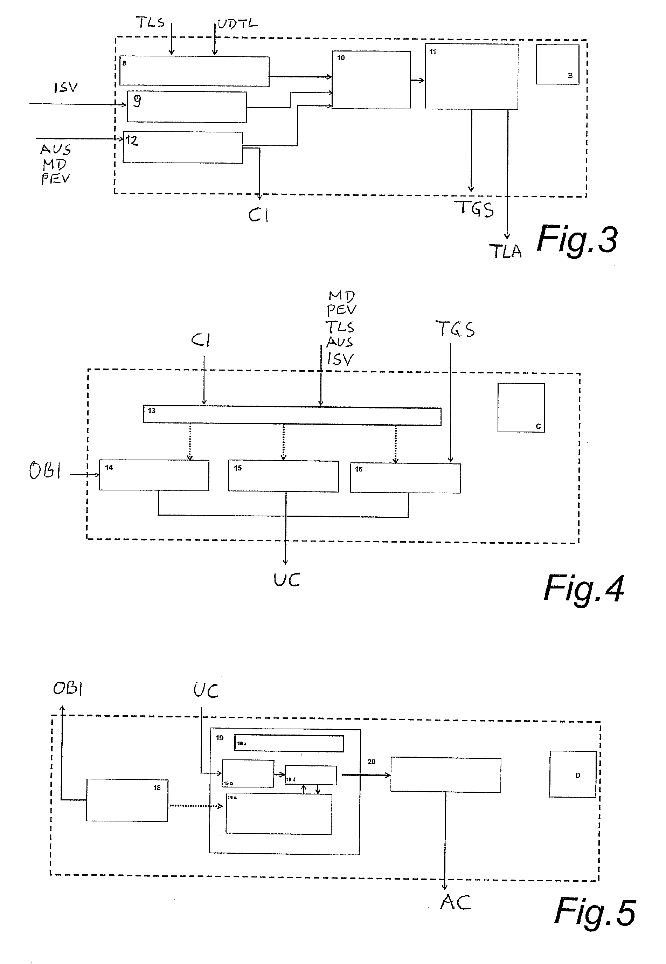

The data traffic light scheduling TLS, average upcoming speed AUS on the route ahead (in road segments ahead), map data MD, updated distances to traffic lights UDTL, position of the ego vehicle PEV, information about surrounding vehicles ISV, etc. are inputted to the situation analyzer module B (see Fig. 3).

If all environmental and traffic information is available, the situation is analyzed in the situation analyzer module B, taking the traffic, weather and other environmental information into account. First the situation analyzer module B conducts a quick check of the situation to calculate green phases ("gaps") of each traffic light and screens how to target it with a proper trajectory of the vehicle.

Item 8 catches the time-space distribution of crossing gaps, processing the information about the traffic lights and yielding their position and time of their "gaps", i.e., green phases, and the respective distance of the vehicle. As a result multiple possible trajectories through the traffic lights ahead are determined.

A microscopic traffic condition analyzer 9 takes into account vehicles directly ahead and behind and provides a short distance acceleration trajectory.

A macroscopic traffic condition analyzer 12 takes into account the average speed of upcoming road segments considering other vehicles information (e.g. via v2i-communication, traffic management systems with cameras, etc.), weather conditions, and so on. The macroscopic traffic condition analyzer 12 provides a long distance acceleration trajectory.

Next, in item 10 a first optimization (minimizing/maximizing cost function) of the acceleration trajectory for the green phases of traffic lights ahead based on the information from the preceding items 8, 9 and 12 is conducted to go through traffic lights on a green wave. Item 10 does not yet consider any power-train information of the ego-vehicle. As a result, item 11 makes a selection of the most beneficial fitting green phase gap combination for all traffic light ahead as a result of the optimization of item 10 ("corridor"). Beneficial here means searching for gaps at traffic lights ahead that allow for smooth passing of said lights without or minimum number of stops. For example at first traffic light the first green phase may be targeted, at second traffic light its third green phase and at third traffic light the tenth green phase.

The result of situation analyzer module B is the information in which time window the ego vehicle needs to be at which position (i.e. at which traffic light at which green phase) in order to pass through all the gaps chosen in module B. If traffic lights are clocked to provide a "green wave" a time-corridor is defined in which the vehicle has to pass certain positions, i.e., the traffic lights. Item/step 10 provides trajectory planning, i.e., which gaps (= green phase) to aim for at which traffic light. The term "corridor" here signifies that even though the green phases to target at each traffic light are fixed the exact time when to pass it during the selected green phase remains to be decided. This leaves lots of time-space combinations, i.e., a time-place-corridor.

The time gap selection TGS as well as constraint information CI about possible constraints modification are inputted to the next instance, i.e. the constraint handler module C (see Fig. 4). To make sure that all available information is used, updated constraint information is constantly included in subsequent steps. Further inputs of constraint handler module C are traffic light scheduling TLS, average upcoming speed AUS, map data MD, position of the ego vehicle PEV, Information about surrounding vehicles ISV, on board information OBI, and other.

The constraint handler module C defines constraints (i.e. boundaries of the corridor mentioned in situation analyzer module B) that have to be included into any optimization. The constraint information includes power-train information and vehicle information like battery status information, speed, position, tire pressure, efficiency of electric machine or combustion engine. In item 13 the constraint handler module C converts the measurement of preceding steps into formats that can be processed by a controller (e.g., conversion of traffic light phases into time). Item 13 comprises a mathematical step, collecting and converting signals into usable values/formats for optimization routine (see a real time optimization module D, item 19).

Item 14 defines power-train constraints, taken from on-board information OBI (e.g., for an electric machine: recuperation is limited by maximum possible torque, available battery charge, available torque, etc.).

Item 15 creates speed constraints, e.g., speed limits that have to be obeyed, average speed from item 12, microscopic information from item 9; constraints of reality (optimization routine could yield an optimal speed below 0, which is not convenient in the real world).

Item 16 creates position versus time constraints. The ego-vehicle at a certain time has to be at a certain position. So item 16 of the constraint handler module C assesses position and time to stay in optimized trajectory corridor, wherein corridors which were not selected in items 10 and 11 are excluded to facilitate optimization. The ego-vehicle can be at a certain position within a certain timeframe (selected green phase)

The result of the constraint handler module C are updated constraints UC, which are inputted to the real time optimization module D.

The real time optimization module D yields an acceleration trajectory based on the constraints UC of the constraint handler module C being updated continuously (see 19b) and the on board information OBI with vehicle status information (vehicle speed, vehicle position, battery information, efficiency of electric machine). The corridor selected before is narrowed down to the optimized velocity profile and acceleration trajectory.

Item 19 includes the real time optimization 19a, wherein all available information is optimized into an acceleration trajectory by taking power-train information into account and optimizing the trajectory for efficient power-train usage - contrary to prior art solutions which only generate velocity profiles which allow passing through green phases of traffic lights, the method according to the invention considers the efficiency (consumption, recuperation, torque, ...) of the vehicle and its power-train and optimizes the trajectory for both green wave and efficient driving.

Also, the vehicle's reaction to the proposed trajectory is taken into account based on on-board information OBI. Therefore item 19c includes a prediction module based on a longitudinal vehicle model and a power-train model to estimate the vehicle behaviour during overall manoeuvre. This module is updated at each instant with the new information obtained from earlier items and also with control inputs, resulting from the optimization routine including not only current optimal control signals but also the future control signals. This allows for consideration of future power-train behavior in the optimization. Control input here signifies all results from the optimization routine according to the invention that are applied to the power-train, e.g., a number of acceleration values.

The longitudinal model of the vehicle is used to estimate the vehicle speed v and the position of the vehicle along the distance d for which the acceleration trajectory is optimized. This is directly used in the formulation of the optimization routine. This allows implicitly excluding speed profile possibilities that are not compatible with the selected corridor. The longitudinal vehicle model is a model that only considers the longitudinal dynamics of the vehicle because lateral dynamics do not have major impact on energy consumption. Hence, calculation of the optimization routine may be faster.

An optimization routine generates not only current control inputs but also inputs along the route ahead ("control horizon", e.g. for a time period of n time units with n=20), allowing for estimation of the vehicle longitudinal position and vehicle speed v for a specified time period Δt (e.g., 20 sec.) using this calculated control input resulting from the optimization.

When time moves ahead one time unit (e.g., 1 sec.) a new control horizon with new optimal control inputs is calculated again. The estimation is repeated again with this new set of optimal control inputs. Hence, this prediction is moving with the car position and estimates the vehicle position and vehicle speed v along the route. It means the longitudinal model runs all the time while the vehicle moves and predicts the positions and speed v and other characteristics of the vehicle.

Hence, for each iteration the optimization routine generates a new set of control inputs (control horizon) for the near future, taking into account the power-train's reaction to the control inputs calculated earlier, with one control input being applied to the power-train and the others being used for predicting the power-train's reaction as input for the next iteration of the method according to the invention.

The power-train model works together with the longitudinal model. Since the longitudinal model calculates the vehicle position and speed it is possible also to calculate the power-train components' behavior during the time period Δt using these quantities. For instance, at a certain time t, the optimization module D calculates a control input (desired acceleration) sequence:

| | |
|---|---|
| Desired acceleration: | a(t), a(t+1), a(t+2), a(t+3)....a(t+ Δt)) |

Using the longitudinal model this desired acceleration a can be converted into a speed sequence:

| | |
|---|---|
| Vehicle speed: | v(t), v(t+1), v(t+2),v(t+3)....v(t+ Δt) |

Vehicle speed v and acceleration a can easily be converted into power-train behavior (for example engine speed n, engine torque M) using a power-train model (gear ratios for power-train speed calculation, acceleration into force via vehicle longitudinal model and torque with power-train model):

| | |
|---|---|
| Engine speed: | n(t), n(t+1), n(t+2).... n(t+ Δt) |
| Electric machine speed: | n_{EM}(t), n_{EM}(t+1), n_{EM}(t+2).... n_{EM}(t+ Δt) |
| Engine Torque: | M(t), M(t+1), M(t+2).... M(t+ Δt) |
| Electric Machine Torque: | M_{EM}(t), M_{EM}(t+1), M_{EM}(t+2).... M_{EM}(t+ Δt) |

Among other things, two things have to be considered when optimizing the acceleration profile:
a) Acceleration: First of all speed signals are used to consider the power train related constraints, such as maximum available engine torque M and electric machine torque M_{EM}, minimal and maximal engine speed n, maximal electric machine speed n_{EM} etc. This allows considering additional constraints so that the optimization routine does not calculate a speed profile which is not feasible due to power train speed and torque limitation. For instance, if the optimization routine yielded an acceleration profile that requires the vehicle to travel hundreds of meters within seconds the considered constraints prevent such a result from being applied. This consideration is relevant if the optimal velocity profile implies an acceleration or constant speed profile.
b) Deceleration: If the optimal velocity profile requires a deceleration related velocity profile with negative acceleration and if the vehicle is also equipped with an electric machine for recuperation, in order to prevent any wasting energy in mechanical conventional brakes, the system can be forced to use only the electric machine. In this case, the velocity profile optimization considers maximum available recuperation torque along the route. Since, in electric machines, maximum torque (in this case maximum negative torque for braking) dependents primarily on electric machine speed n_{EM} (proportional to vehicle speed), the available maximum torque along the route has to be checked. Therefore, once the longitudinal model calculates vehicle speed v along the route, this vehicle speed v is converted to an electric machine speed n_{EM} and hence the maximum available negative torque M_{EM}. This puts additional constraint to the optimization routine.

Depending on the route ahead cases a) and b) can occur at the same time because the optimized velocity profile can have both acceleration and deceleration parts.

Therefore, the power-train model is used to introduce power-train related constraints into the optimization calculation.

The constraints are only valid for the current step time. In a new iteration of the optimization routine this constraint checking calculation, is repeated for the new conditions. Similar to the longitudinal model, the power-train model is repeatedly calculating the conditions ahead. This is mainly required because the estimation sequence must be forwarded ahead (one step, e.g., one time unit) to cover new conditions; also, if something changes ahead (e.g. a cut-in vehicle, changes in traffic or environmental conditions) the calculation and optimization must be carried out with new conditions.

This constraint handling can further be extended to electrical behavior of the component, maximum battery voltage, battery power etc. This depends on the complexity of the power-train model used in the vehicle.

A second point where power-train model is used is for estimation of the energy behavior on the road ahead. Speed and torque values can be used to calculate the efficiencies η, η_{EM} of components:

| | |
|---|---|
| Engine efficiency : | η(t), η (t+1), η(t+2).... η(t+Δt) |
| Electric machine efficiency : | η_{EM}(t), η_{EM}(t+1), η_{EM}(t+2).... η_{EM}(t+Δt) |

Since the optimization routine uses a cost function to evaluate a metrics to define an optimal speed profile, this cost function must imply the energy consumption of the vehicle along the route ahead when the calculated velocity profile is applied. To be able to estimate the consumption of the vehicle along the route, component efficiencies are used. There are additional efficiencies regarding the consumption (e.g. gear ratios efficiencies, battery efficiencies, etc.). All these behaviors are calculated using the power-train model. Similarly thermal behaviors, electrical behaviors or any other behaviors can be calculated: Those are the secondary factors influencing energy consumption, it depends on the power-train model complexity.

Again these efficiencies η, η_{EM} along the route are calculated at each instant and moved one step when new control inputs are executed.

Longitudinal and power-train models are used for both constraint handling (item 14) and energy consumption calculation (in item 19c) purposes.

The item 19d generates a sequence of n desired acceleration values (control inputs) for a specific time slot ("control horizon", consisting of a number of time units, e.g., n=20 for values for the next 20 seconds); in item 20 the desired acceleration AC is gathered. The first value (or some of the first values) of the sequence of desired acceleration AC values of item 19d is forwarded to item 20 and subsequently applied. Therefore, prediction is updated with the new information coming at the very current moment and with the generated control signal segments (n=20 time units or 20 seconds as in the current example).

The entire sequence is fed to item 19c to predict the vehicle's and its power-train's reaction to the values and to iteratively include this reaction into the next sequence of values when performing the optimization again.

The human machine interface module E allows the driver to hand over control of the vehicle to a control system of the vehicle and to apply the green-wave-optimization. Item 17 signals the driver via a human machine interface module E that the traffic light assistant can be activated. Also, this human machine interface module E could display instructions for the driver to implement the results of the method according to the invention. In item 21 the driver is asked if he accept to use the traffic light assistant, i.e., agrees to apply the green-wave-optimization or not. If the driver chooses "no" the system signals in some display, acoustic signal, and so on further indicates the availability of the optimization (see SRP - "system is ready to be operated"). If the driver chooses "yes", the optimization takes control (e.g., the driver can take the foot off the gas pedal), the calculated inputs are applied (APP). It is also possible to automatically apply the results of the optimization without asking the driver's permission; this could be implemented for vehicles that drive autonomously or semiautonomously.

The vehicle level module F translates the acceleration trajectory into a torque value for the prime mover, e.g., an electric machine or a combustion machine, using an arbitration module 24 to convert acceleration demands AC into torque demands TQ (item 22), in order to control a traction actuator or brake actuator (e.g. an electric machine), respectively (item 23).

In an application of the method the optimization routine begins with startup of the vehicle and continuously determines the optimal trajectory and acceleration trajectory by gathering environmental information and details about traffic, surrounding vehicles and road segments ahead. This information is used as input for the optimization routine which is iteratively performed during operation of the ego vehicle, resulting in a proposed velocity profile and acceleration trajectory. The optimization not only calculates a trajectory for immediate usage but also for the near future to iteratively assess its impact on the power-train and other vehicle characteristics, using their response as input for next iteration steps.

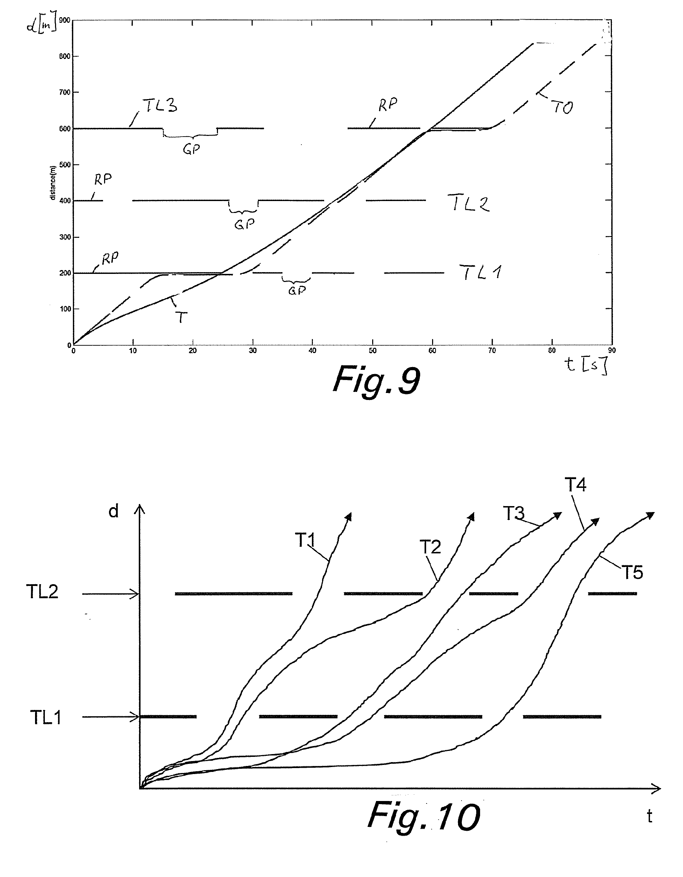

Fig. 9 shows a diagram comparing the passing of traffic lights passes of a vehicle with and without using the inventive method, with the distance d and the time t of a travelling vehicle. The horizontal lines RP represent the timing of red phases of three upcoming traffic lights TL1, TL2, TL3 at specific positions. The gaps GP represent the timing of green phases of the three upcoming traffic lights TL1, TL2, TL3 at their specific positions. According to the present method a generic trajectory T is chosen such that the vehicle selects the first upcoming green light phase at the first traffic light TL1, the third green light phase at second traffic light TL2 and the third green light phase at the third traffic light TL3. The dashed curve T0 depicts a vehicle without using the present method which has to stop at the first and third traffic lights TL1 and TL3.

Fig. 10 and the following figures show an application of the method according to the invention in more detail. Another distance-time diagram in Fig. 10 shows five possible basic trajectories T1, T2, T3, T4, T5 for available gaps of two traffic lights TL1 and TL2 ahead, with the basic trajectories being determined by the situation analyzer module B. There are many more possible basic trajectories but here only five are shown for the sake of understandability. The basic trajectories T1, T2, T3, T4, T5 differ in which gaps at which traffic light TL1, TL2 they chose and how they approach the respective gap to pass the traffic light.

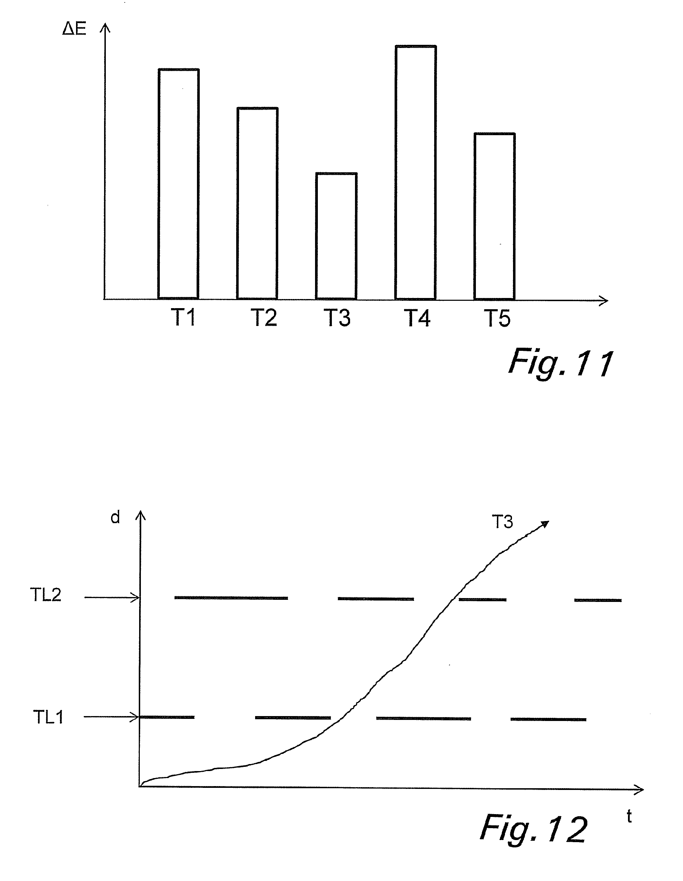

In step 10 an energy balance for each possible basic trajectory T1, T2, T3, T4, T5 is estimated. Fig. 11 shows the changes in energy ΔE (difference between energy spent energy and energy gained) per basic trajectory wherein the third basic trajectory T3 (Fig. 12) is most beneficial and selected by/in item 11. However, deciding for one basic trajectory is not enough because there is an infinite number of possibilities of how to move through the corridor defined by chosen green gaps GP (time windows) and position of traffic lights.

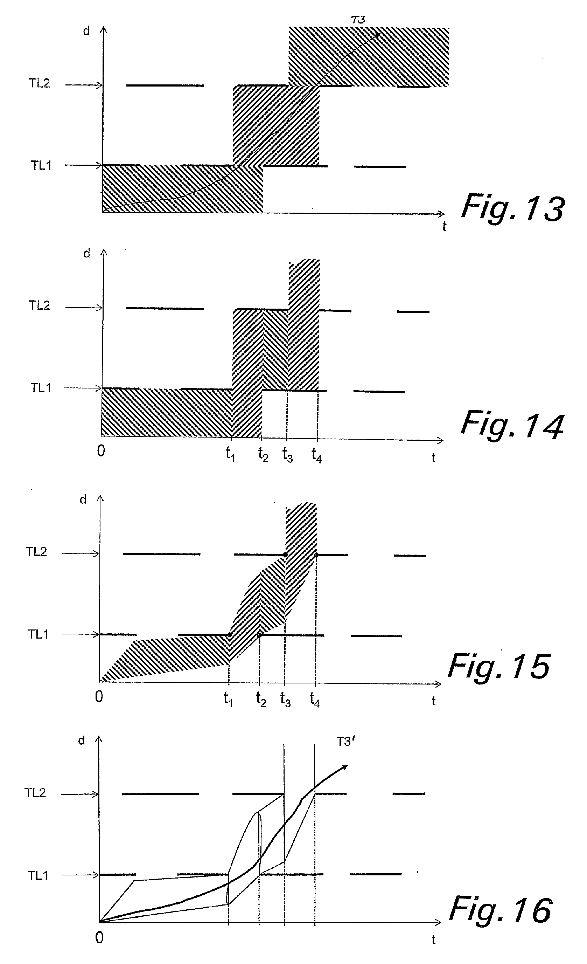

Therefore, the constraint handler (Item 14, 15 and 16) is used to narrow down the available corridor of the third basic trajectory T3, as indicated in Fig. 13 to 16.

Fig. 13 shows three striped boxes equaling the three road segments and time windows that are discussed in this simplified example of the method according to the invention. The first road segment is between the current position and the first traffic light TL2, the second road segment is between the first TL1 and second traffic light TL2 and the third road segment is after the third traffic light TL3.

Fig. 14 sub-divides the segments also considering the timing of the passing of the vehicle so the constraint handling and the optimization may allow selecting the optimum trajectory. Between t=0 and t=t₁ (beginning of the second green phase of the first traffic light TL1 which needs to be targeted according to basic trajectory T3) the vehicle may be anywhere between its current position (which will be called "position 0" in the following) and the position of traffic light TL2.

Between t=t₁ and t=t₂ the vehicle may be anywhere between position 0 and the position of the second traffic light TL2. Between t=t₂ and t=t₃ the vehicle may be anywhere between the first traffic light TL1 and the second traffic light TL2. Between t=t₃ and t=t₄ the vehicle may be anywhere between the first traffic light TL1 and somewhere beyond the second traffic light TL2.

Obviously, some of the areas of the striped boxes need to be excluded because they are not feasible with a real vehicle within the limits of physics. Hence, Fig. 15 shows how the constraint handler C, particularly its items 14 and 15 delimit the available corridor based on speed constraints (speed limits, other vehicles, general average speed in available road segments) and power-train constraints (state of charge, ...). Item 16 defines constraints for time (start time t₁; t₃ and end time t₂; t₄ of chosen green gap) and location (position of traffic light), marked in Fig. 15 by black circles.

The results of the constraint handler then serve as input for the optimization according to the invention, the process resulting in an optimized velocity profile/trajectory T3' shown in Fig. 16. This trajectory T3' not only allows for passing of the traffic lights TL1, TL2 during their green phases without stopping but also in the most efficient way regarding the vehicle and its power-train.

This optimization routine and the way it is working is only one way of generating energy optimal speed profile considering power-train efficiency, recuperation energy, traffic ahead and traffic light timings. But the problem can be solved also using alternative methodology, within the scope of the present invention.

## Claims

1. Method for operating an ego vehicle with at least one prime mover on a route during approaching and passing one or several traffic lights (TL1, TL2, TL3), comprising the following steps which are continuously iterated during operation of the ego vehicle:
a) scheduling a data map of traffic lights (TL1, TL2, TL3), including positions and phase sequences of the traffic lights (TL1, TL2, TL3);
b) gathering the position of the ego vehicle, preferably by a global positioning system;
c) recording the position and the speed of surrounding vehicles, preferably of vehicles driving on the same route ahead of the ego vehicle;
d) gathering information about the route, preferably environmental information and/or traffic information and/or information on the position and the speed of at least one surrounding vehicle driving ahead of and/or behind the ego vehicle;
e) gathering power-train and efficiency information of the ego vehicle;
f) estimating and optimizing a velocity profile on the basis of steps a) to e), wherein an acceleration trajectory (T3) is determined for efficiently operating the power-train while approaching and passing the route's traffic lights.

2. Method according to claim 1, **characterised in that** in a step g) following step f) the optimized velocity profile is applied to the ego vehicle preferably either automatically or by activation of a respective driving mode which applies the optimized profile by the driver of the ego vehicle or by the driver of the ego vehicle via driving recommendations derived from the optimization of step f).

3. Method according to claim 1 or 2, **characterised in that** a vehicle behaviour during the acceleration trajectory of step f) is predicted based on a longitudinal vehicle model and a power-train model.

4. Method according to one of the claims 1 to 3, **characterised in that** in step f) a sequence of n desired acceleration values for a specific time slot of n time units is generated, wherein at least one or more of the acceleration values are applied and the remaining acceleration values are used to predict the power-train's reaction to the optimized velocity profile of step f) in subsequent iterations of the method.

5. Method according to one of the claims 1 to 3, **characterised in that** in step f) a sequence of n desired acceleration values for a specific time slot of n time units is generated, wherein a sequence of torque demands for the prime mover is established based on the sequence of desired acceleration values, wherein preferably the sequence incorporates the predicted vehicle behaviour.

6. Method according to one of the claims 1 to 5, **characterised in that** optimizing the velocity profile is done under consideration of constraint information, preferably by considering at least one or more of the following restricting elements: static traffic objects, speed limitations, power-train limitations, environmental details.

7. Method according to one of the claims 1 to 6, **characterised in that** optimizing the velocity profile is done under consideration of moving traffic objects, preferably other vehicles or pedestrians.

8. Control system for operating an ego vehicle with at least one prime mover on a route during approaching and passing one or several traffic lights (TL1, TL2, TL3), according to the method of one of the claims 1 to 7, comprising:
• an information and receiver sensorics module (A) collecting information from the environment by corresponding sensors;
• a situation analyzer module (B) analyzing the possibility of gathering a green phase corridor for all traffic lights, considering information about the positions and sequences of traffic lights, surrounding vehicles, and environmental information;
• a constraint handler module (C) defining constraints for the optimization;
• a real time optimization module (D) estimating an optimized acceleration trajectory (T3) based on the constraints;
• a vehicle level module (F), to estimate an acceleration trajectory (T3) into torque values for the prime mover.

9. Control system according to claim 8, further comprising a human machine interface module (E) which allows the driver to hand over the vehicle to a control system of the ego vehicle.
